# EUROPÄISCHE PATENTSCHRIFT

(11) **EP 1 627 831 B1**
(45) Veröffentlichungstag und Bekanntmachung des Hinweises auf die Patenterteilung: **10.10.2007**
(21) Anmeldenummer: 04019520.8
(22) Anmeldetag: 17.08.2004
(51) Int. Cl.: B65G 17/34, B65G 47/96

(54) **Sortier- und Verteilsystem sowie ein Verfahren zur Energie- und Datenübertragung**
Sorter conveyor and method for transmitting power and data
Convoyeur de triage et méthode de transmission d'énergie et de données

(43) Veröffentlichungstag der Anmeldung: 22.02.2006
(73) Patentinhaber: Dematic S.r.l., 20041 Agrate Brianza (IT)
(72) Erfinder: Mignano, Paolo, 28043 Bellinzago Novarese (NO) (IT)
(74) Vertreter: Heusler, Wolfgang

(56) Entgegenhaltungen:
- DE-A1- 19 845 527
- US-A1- 2004 134 752

## Beschreibung

Die Erfindung betrifft ein Sortier- und Verteilsystem sowie ein Verfahren zur Energie- und Datenübertragung in einem Sortier- und Verteilsystem, bestehend aus zu einem Zug aneinander gekoppelten, entlang von Fahrschienen verfahrbaren Wagen mit jeweils mindestens einem darauf angeordneten Träger für das zu transportierende Gut und Mitteln zum Abgeben des zu transportierenden Gutes quer zur Transportrichtung der Wagen an einer vorbestimmbaren Entladestelle, sowie mit entlang der Fahrschienen stationär angeordneten Primärteilen zur Energieversorgung der Wagen des Zuges, welche Primärteile mit an den Wagen vorgesehenen Sekundärteilen induktiv verbindbar sind und mit Einrichtungen zur drahtloser Übertragung von Steuerdaten für den Zug.

Sortier- und Verteilsysteme der beschrieben Art werden seit langem zum Transport und zum Sortieren von Stückgut, wie Pakete, Päckchen, Behälter und Gepäckstücke eingesetzt. Die Wagen der bekannten Systeme sind als Kippschalensorter mit Tragschalen bestückt, die das zu transportierende Gut aufnehmen und die zur Abgabe des Gutes an einer vorgesehenen Entladestelle mittels eines Kippmechanismus verschwenkbar sind, um das Gut quer zur Transportrichtung des Zuges abzuwerfen. Bei Querbandförderern sind die Träger für das zu transportierende Gut als auf jedem Wagen angeordnete, quer zur Transportrichtung des Zuges antreibbare Förderbänder ausgebildet, die an der Entladestelle umlaufend angetrieben werden, um das Gut quer zum Förderweg auszutragen.

Es ist bekannt, Sortier- und Verteilsysteme der vorbeschriebenen Art mit Energie zu versorgen, indem elektrische Leitungen mit stationären Stromschienen verbunden werden, die entlang des Fahrweges der Wagen verlegt sind. Über Schleifkontakte wird der jeweilige Wagen mit der Stromschiene und damit mit der Energiequelle verbunden, so dass ein auf dem Wagen vorgesehener elektrischer Antrieb während der Fahrbewegung mit elektrischem Strom versorgt werden kann.

Da die Stromabnehmer in ständigem Anpresskontakt mit den Schleifleitungen verbleiben müssen, unterliegen die Schleifleitungen und auch die Kontakte einem erheblichen Verschleiß. Das bedingt eine aufwändige Wartung des Systems mit entsprechenden Nutzungsausfällen, die vielfach nicht akzeptabel sind.

Man hat deshalb Lösungen gesucht, um den Verschleiß und die Wartung zu minimieren und vorgeschlagen, die Energieübertragung zwischen einer stationären Stromschiene (Primärteil) und dem auf dem Wagen vorgesehenen Sekundärteil induktiv, d.h. berührungslos vorzunehmen (DE 198 45 527 A1). Die mit Wechselspannung gespeiste Stromschiene wird sowohl zur Speisung der Wagen mit Antriebsenergie für die Elektromotoren als auch mit steuerungsrelevanten elektrischen Informationen beaufschlagt, die nach der induktiven Übertragung der Energie auf dem Wagen getrennt bzw. herausgefiltert werden. Die bekannte Lösung regt an, die induktive Energieübertragung im Mittelfrequenzbereich bei ca. 25 kHz durchzuführen. Die übertragene Wechselspannung wird auf dem Wagen in eine Gleichspannung umgewandelt. Es wird bei dieser bekannten Lösung als nachteilig empfunden, dass die in die entlang der Förderstrecke verlegte Stromschiene eingespeiste hohe Energie zu erheblichem Elektrosmog in der Umgebung der Stromschine führt. Zudem mindern hohe Leistungsverluste bei der Stromübertragung die Anlagenleistung, die Übertragung von Steuerdaten kann aufgrund der Modulation und Filterung relativ langsam und störbehaftet sein.

US 2004/0134752 A1 offenbart einen Sortierförderer in Form von zu einem Zug zusammengekoppelter einzelner Wagen, die jeweils ein von einem Elektromotor angetriebenes Querband zum Abgeben des Transportgutes tragen. Währen der Rotor dieses Motors auf dem Wagen angeordnet ist, dienen als Statoren in Abständen entlang der Fahrschiene angeordnete stationäre Primärteile.

Aufgabe der vorliegenden Erfindung ist es, ein Sortier- und Verteilsystem mit induktiver Energieübertragung so zu verbessern, dass mit vereinfachten und nachrüstbaren Mitteln eine hohe Geschwindigkeit und Beschleunigungsleistung der Wagen bei geringem Energieverbrauch ebenso erzielbar ist, wie ein schneller und zuverlässiger Datentransfer zwischen einem das System steuernden Zentralrechner und den anzusteuernden Wagen des Zuges. Dabei soll der für die Umwelt schädliche Elektrosmog weitgehend vermieden werden.

Zur Lösung der Aufgabe wird vorgeschlagen, dass die Primärteile in Abständen zueinander entlang der Fahrschiene angeordnet sind und die Sekundärteile in induktiver Reichweite an den Primärteilen vorbeibewegbar sind. Eine Besonderheit der erfindungsgemäßen Lösung besteht darin, statt einer durchgehenden Stromschiene zur induktiven Energieversorgung der Wagen nunmehr einzelne Primärteile in seitlichen Abständen zueinander neben der Fahrschiene anzuordnen. Diese Lösung ermöglicht es, die Energie nur dann an die Sekundärteile eines Wagens zu übertragen, wenn dieser in unmittelbarer Nähe der Primärteile an diesen vorbeibewegt wird. Wenn sich Primärteil und die Sekundärteile der Wagen unmittelbar gegenüber liegen, findet keine unnötige Streuung statt, die die Entstehung von Elektrosmog hervorrufen würde.

Außerdem wird zur Erhöhung der Effizienz der Datenübertragung die niederfrequente Versorgungspannung eines jeden Primärteils in eine induktiv in den Sekundärteil übertragene Spannung höherer Frequenz umgewandelt.

Um die Übergabestellen für die zu übertragende Energie zu reduzieren und alle Wagen einer Gruppe zu versorgen, ist nach einem anderen Merkmal der Erfindung vorgesehen, dass die an den Wagen vorgesehenen Sekundärteile mehrerer eine Gruppe bildender Wagen über einen Power- und/oder Daten-Bus miteinander verbunden sind. Durch den Daten-Bus wird die Kompatibilität zu der bisherigen Kommunikationsarchitektur erhalten; die serielle alle Wagen verbindende Leitung ist vorzugsweise zu einem als Masterfahrzeug der Wagengruppe bestimmten Wagen geführt.

Erfindungsgemäß ist vorgesehen, dass der größtmögliche Abstand zwischen zwei benachbarten Primärteilen geringer als die halbe Länge eines Zuges ist. Wenn beispielsweise ein Zug aus 32 gleichartigen Wagen besteht, so sollen nach dem Gedanken der Erfindung stets mindestens zwei der Primärteile an der Energieübertragung beteiligt sein. In jedem Fall soll aber sichergestellt werden, dass auch mit den wenigen Primärteilen eine ununterbrochene Energieversorgung gewährleistet ist. Selbst der Ausfall eines Primärteiles würde die Funktionsfähigkeit des Systems nicht einschränken.

Vorzugsweise erstreckt sich deshalb jedes Primärteil parallel zur Fahrschiene über eine solche Länge, dass sich stets zwei Sekundärteile zumindest teilweise in induktiver Reichweite befinden. Auf diese Weise wird sichergestellt, dass keine Energieversorgungslücken entstehen, weil stets zwei benachbarte Wagen versorgt werden.

Um eine möglicht große Effizienz bei der Übertragung der Energie zu erreichen, soll nach einem anderen Merkmal der Erfindung der lichte Abstand zwischen den Primär- und Sekundärteilen 1 mm bis 5 mm, vorzugsweise 3 mm betragen.

Nach einem besonders wichtigen Merkmal der Erfindung ist vorgesehen, dass die drahtlose Übertragung von Steuerdaten für den Zug über eine elektromagnetische Welle zwischen einer am Primärteil vorgesehenen Sendeantenne und einem am Sekundärteil vorgesehenen Empfangsantenne erfolgt. Damit entfällt das aufwändige Filtern des Mischsignals, welches beim Stand der Technik sowohl die Speiseenergie als auch das Datensignal berührungslos überträgt.

Erfindungsgemäß umfasst jedes der Primärteile einen Netzgleichrichter und einen nachgeordneten Wechselrichter zur Frequenztransformation, sowie mindestens einen an den Wechselrichter ausgangsseitig angeschlossenen Transmitter zur Energieversorgung der Wagen. Mit diesen Bauteilen wird die Netzspannung von beispielsweise 350V bis 500V und einer Frequenz von 50Hz bis 60Hz zunächst in einen Gleichstrom umgewandelt und anschließend zu Wechselstrom mit höherer Frequenz transformiert, der benötigt wird, um das jeweilige in Reichweite befindliche Sekundärteil eines Wagens mit hoher Effizienz induktiv zu versorgen, da mit höher gewählter Frequenz auch die induktiven Spaltverluste abnehmen.

Nach einem weiteren Merkmal der Erfindung ist vorgesehen, mit Hilfe eines Wandlers die zur Verfügung stehenden Steuerdaten für den Zug in ein berührungslos übertragbares Signalformat umzuwandeln. Zu diesem Zweck werden die beispielsweise im RS485 Format anstehenden Steuerdaten in ein FSK moduliertes Radiosignal konvertiert, wodurch Übertragungsgeschwindigkeiten bis zu 19200 BAUD möglich werden. Das Radiosignal wird gleichzeitig mit der modulierten Spannung zur Energieversorgung an das Sekundärteil des nächstliegenden Wagens übermittelt.

Das Trägersignal, das die Sendeantenne zur Datenübertragung abstrahlt, liegt nach einem Vorschlag der Erfindung zwischen 1 bis 10 MHz, vorzugsweise bei 5 MHz. Auf dieses Trägersignal werden die Steuerdaten erfindungsgemäß frequenzmoduliert aufgeprägt.

Es hat sich als besonders günstig erwiesen, wenn die vom Wechselrichter des Primärteiles bereitgestellte Wechselspannung möglichst hoch ist. Deshalb wird erfindungsgemäß vorgeschlagen, eine Frequenz von vorzugsweise 100 kHz einzustellen. Bei dieser Frequenz lässt sich problemlos eine Übertragungsleistung zwischen 1 kW und 4 kW erreichen.

Erfindungsgemäß enthält jedes der Sekundärteile einen Transceiver und einen nachgeordneten Gleichrichter, sowie einen Demodulator zur Umwandlung des elektromagnetisch übertragenen Steuersignals in ein vom System verarbeitbares Steuersignal, insbesondere in das ursprünglich zur Verfügung stehende Datenübertragungssignal. Die induktiv übertragene Versorgungsspannung von etwa 100kHz wird im Gleichrichter in die vom System verwendete Gleichspannung von beispielsweise 65V verwandelt, und allen Wagen eines Zuges zur Verfügung gestellt. Der Demodulator verwandelt gleichzeitig das von der Sendeantenne abgestrahlte und von der Empfangsantenne empfangene elektromagnetische Signal (beispielsweise 19200 BAUD/5MHz) in das Systemformat, in der Regel wieder in das Format, in dem die Daten ursprünglich in das Primärteil eingespeist wurden. Die Dateninformationen können nun über die seriellen Leitungen an die benachbarten Wagen des Zuges weitergeleitet werden.

Da infolge unterschiedlicher Belastungen der Wagen bzw. des Zuges der Energiebedarf schwankt, wird zur Vermeidung von Lasteinbrüchen im System vorgeschlagen, Datenübertragungsmittel zwischen Wagen oder Zug und dem in induktiver Reichweite liegenden Primärteil vorzusehen, über die das zu übertragende Energievolumen in Abhängigkeit von der aktuellen Last des Wagens und/oder Zuges geregelt wird. Mit einer Feedbackschaltung kann der jeweilige Energiebedarf mit dem Wert der aktuell zur Verfügung stehenden Energie verglichen werden und bei Abweichung von vorgegebenen Werten ein Anheben- oder Absenken der von dem Primärteil auf das Sekundärteil zu übertragenden Energie veranlasst werden.

Es ist von Vorteil, wenn der Netzgleichrichter in einem außerhalb der Fahrschienen vorgesehenen und der Wechselrichter, der Transmitter sowie der Regler zur Regelung des zu übertragenden Energievolumens in einem innerhalb der Fahrschienen angeordneten Gehäuse vorgesehen sind. Durch Austausch nur des Netzgleichrichters kann das System an unterschiedliche zur Verfügung stehende Netzspannungen angepasst werden.

Ein erfindungsgemäßes Verfahren zur Energie- und Datenübertragung in einem Sortier- und Verteilsystem mit in Abständen entlang der Fahrschiene angeordneten Primärteilen und in induktiver Reichweite an den Primärteilen vorbeibewegbaren Sekundärteilen sieht vor, die niederfrequente Spannungsversorgung des jeweiligen Primärteils in zunächst eine Gleichspannung und anschließend zurück in eine Wechselspannung höherer Frequenz umzuwandeln, welche nach verlustarmer induktiver Übertragung in dem Sekundärteil zu einer niedrigeren Versorgungsspannung gleichgerichtet wird. Vorzugsweise werden gleichzeitig mit der induktiven Übertragung die zur Verfügung stehenden Steuerdaten frequenzmoduliert auf das Trägersignal aufgeprägt, elektromagnetisch an den Wagen übertragen und dort in ein vom System verarbeitbares, insbesondere in das ursprünglich zur Verfügung stehende Datenübertragungssignal demoduliert.

Vom besonderem Vorteil ist es, wenn nach dem erfindungsgemäßen Verfahren der Wechselrichter durch eine Feedbackschleife stets derart berührungslos angesteuert wird, dass die Differenz zwischen einem Sollwert der Versorgungsspannung und der sich lastabhängig einstellenden Ist-Spannung ausgeglichen wird, so dass unterschiedliche Belastungen der Wagen des Zuges ohne Einfluss sind.

Das System und das Verfahren der Erfindung weisen eine Reihe von Vorteilen gegenüber dem Stand der Technik auf. So ist das System weitgehend wartungsfrei und sicher gegen unbeabsichtigte Berührungen elektrischer Kontakte. Geschwindigkeiten und Beschleunigungen sind in weiten Grenzen einstellbar, die Leistung ist modulierbar und an die Belastung des Förderers anpassbar. Die Übertragung der Steuerdaten erfolgt mit sehr hohen Übertragungsgeschwindigkeiten und schaltungstechnisch günstiger. Der bei induktiven Systemen an der Stromschiene auftretende Spannungsabfall wird mit der Erfindung dadurch reduziert, dass nur definierte Einspeispunkte entlang der Förderbahn vorgesehen sind. Zudem ist das System sehr einfach in bestehende Systeme integrierbar, bzw. kann die existierenden Systeme, beispielsweise Schleifleitungen ersetzen.

Ein Ausführungsbeispiel der Erfindung ist in der Zeichnung dargestellt und wird nachfolgend beschrieben. Es zeigt:
- Figur 1: In perspektivischer Übersichtsdarstellung einen Zug aus mehreren gekoppelten Wagen in einem erfindungsgemäßen System,
- Figur 2: die Schaltung der Komponenten des erfindungsgemäßen Systems in graphischer Darstellung,
- Figur 3: die Feedbackschaltung zwischen Sekundär- und Primärteil und
- Figur 4: das Sekundärteil der Erfindung im Detail
- Figur 5: die Systemarchitektur des erfindungsgemäßen Systems.

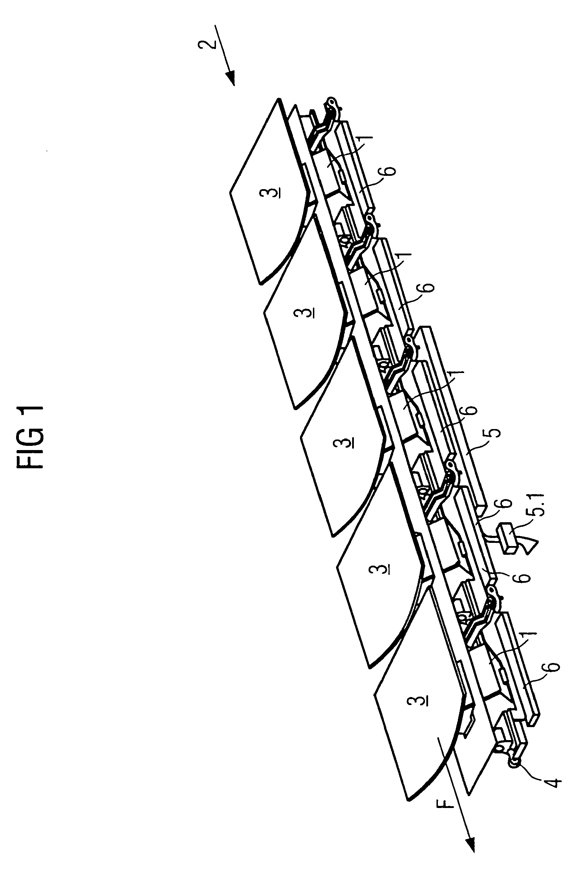

In Figur 1 ist in perspektivischer Darstellung ein aus fünf miteinander gekoppelten Wagen 1 bestehender Zug 2 eines erfindungsgemäßen Sortier- und Verteilsystems dargestellt. Jeder Wagen 1 trägt an seiner Oberseite einen Träger 3, der um eine in Förderrichtung F ausgerichtete Schwenkachse kippbar ist und eine Kippschale zur Aufnahme des (nicht dargestellten) zu transportierenden Gutes bildet. Die Wagen 1 sind über Kupplungen 4 aneinander gekoppelt, so dass ein Zug entsteht, der aus bis zu 32 Wagen 1 bestehen kann. Alle Wagen 1 sind auf einer gemeinsamen Fahrschiene geführt, neben der in größeren seitlichen Abständen zueinander die Primärteile 5 zur induktiven Energieversorgung der Wagen 1 angeordnet sind, von denen in Figur 1 nur eines dargestellt ist. Die Primärteile 5 korrespondieren mit den jedem Wagen 1 zugeordneten Sekundärteilen 6, die beim Fahren des Zuges 2 in sehr engem Abstand (3 mm) in Induktionsreichweite an den Primärteilen 5 vorbeibewegt werden. Wie erkennbar, sind die Primärteil 5 und die Sekundärteile 6 lang gestreckt ausgebildet, wobei das Primärteil 5 länger als jedes der Sekundärteile 6 ist. Dadurch wird erreicht, dass einem Primärteil 5 in jeder Fahrstellung des Zuges 2 stets mindestens zwei Sekundärteile 6 mindestens teilweise gegenüber stehen. Mit 5.1 ist ein außerhalb der Fahrschienen des Zuges 2 angeordneter, zum Primärteil 5 gehörender Gleichrichter bezeichnet, der die dort eingespeiste Netzspannung in Gleichspannung umwandelt.

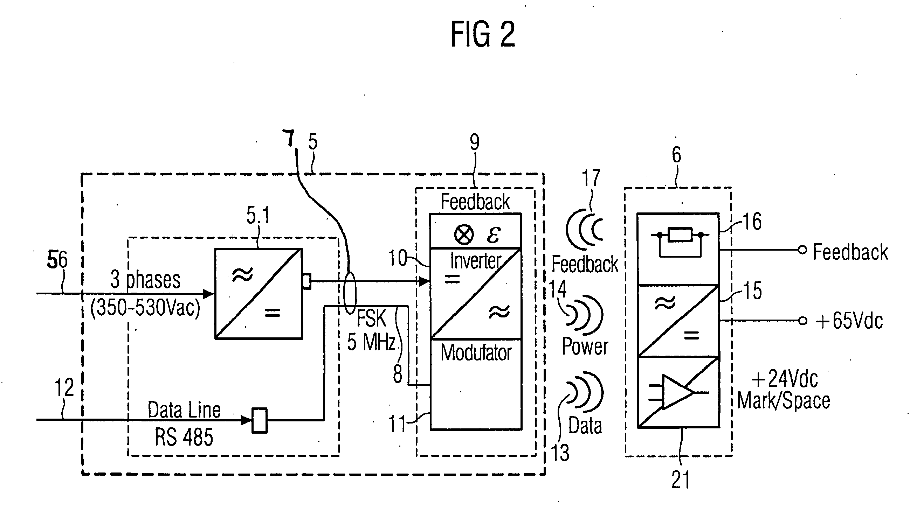

In Figur 2 ist die Schaltung der einzelnen Komponenten des erfindungsgemäßen Systems verdeutlicht dargestellt. Wie auf der linken Seite der Darstellung erkennbar, wird in den außerhalb der Fahrschienen des Zuges angeordneten Gleichrichter 5.1 des Primärteiles 5 bei 56 eine Dreiphasenwechselspannung von 350V und 50 Hz eingespeist, die im Gleichrichter 5.1 in eine Gleichspannung umgewandelt wird, und über ein maximal 1,5 m langes Kabel (Leitung 7), zusammen mit einem Steuersignal 8 einer innerhalb der Fahrschiene angeordneten Box 9 zugeleitet wird, in der u. a. ein Wechselrichter 10 und modulare Windungen angeordnet sind. Der Wechselrichter 10 wandelt die über die Leitung 7 eingespeiste Gleichspannung in eine 100 kHz Wechselspannung um. Das über eine Datenleitung 12 von einem (nicht dargestellten) Zentralcomputer kommende Steuersignal wird in ein frequenzmoduliertes Radiosignal von 5 MHz umgewandelt, bevor es über die gemeinsame Leitung 7 an die den Wechselrichter 10 aufnehmende Box 9 übertragen wird. Von dort aus kann das FSK Radiosignal als elektromagnetische Welle 13 von einer dem Primärteil 5 zugeordneten Sendeantenne an eine Empfangsantenne im Sekundärteil 6 des Systems übermittelt werden. Alternativ könnte die Umwandlung der Steuerdaten auch in der Box 9 durchgeführt werden.

Die Energieübertragung vom Wechselrichter 10 erfolgt mit einer Übertragungsleistung zwischen 1 kW und 3 kW mit einer gegenüber der Netzspannung stark angehobenen Frequenz von 100 kHz bei 14 induktiv zum Sekundärteil 6, wo der empfangene magnetische Fluss in einer Windung eine Wechselspannung hervorruft, die in einem Gleichrichter 15 in eine 65 V Gleichspannung gleichgerichtet wird. Diese 65 V Gleichspannung ist eine erste Arbeitsspannung, die auf den Wagen 1 des Zuges 2 zur Verfügung gestellt wird. Eine zweite Arbeitsspannung von 24 V Gleichspannung wird für die Datenübertragung zur Verfügung gestellt. Das empfange elektromagnetische Funksignal wird in einem Demodulator im Sekundärteil 6 in ein vom System verarbeitbares Datensignal umgewandelt, vorzugsweise in das ursprünglich zur Verfügung stehende RS485 Datenübertragungssignal.

Die Steuersignale werden über serielle Leitungen an die benachbarten Wagen des Zuges weitergegeben und verteilt, wie später noch erläutert werden wird.

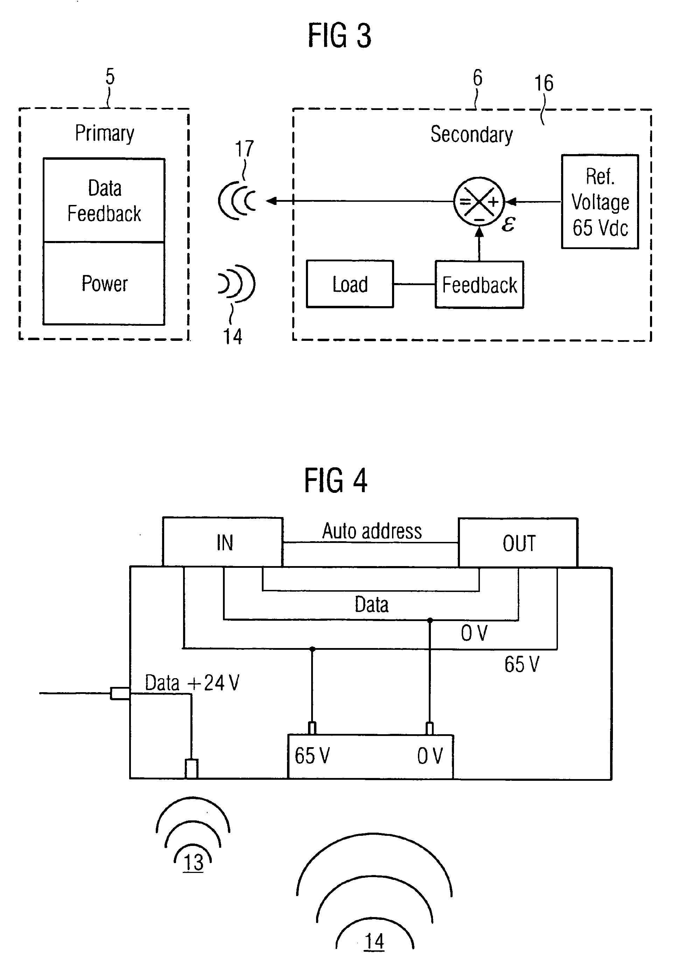

Des Weiteren enthält das Sekundärteil eine Feedback-Schleife 16, mit der der Wechselrichter 10 des Primärteils 5 (wie bei 17 angedeutet) angesteuert werden kann, sobald eine Differenz zwischen einem Sollwert der Versorgungsspannung (Arbeitsspannung 65 V) und der sich lastabhängig einstellenden Ist-Spannung erkannt wird. Die Feedbackschleife 16 ist in Figur 3 detaillierter dargestellt.

Zwischen dem Primärteil 5 und dem Sekundärteil 6 findet eine berührungslose Energie- und Datenübertragung statt. Die Energieversorgung und die Datenversorgung vom Zentralrechner erfolgt vom Primärteil 5 zum Sekundärteil 6 induktiv bzw. elektromagnetisch bei 13 bzw. 14, während über die Feedback-Schleife bei 17 Regelungsdaten zwischen dem Sekundärteil 6 und dem Wechselrichter 10 des Primärteils 5 in umgekehrter Richtung ausgetauscht werden. Wie mit den in dem Sekundärteil 6 dargestellten Symbolen verdeutlicht, wird über einen Soll-Ist-Wert-Vergleich die sich in Abhängigkeit von der Last ändernde Spannungsdifferenz erfasst und als Signal über eine kontaktlose Kommunikationsübertragung (17) an einen auf den Wechselrichter 10 einwirkenden Regler geleitet, über den die Differenz ausgeregelt wird.

In Figur 4 ist detaillierter die Schaltung im Sekundärteil 6 des erfindungsgemäßen Systems dargestellt. Wie bei 14 symbolisch angedeutet, wird die vom (hier nicht dargestellten) Primärteil 5 induktiv übertragende Energie im Wechselrichter 10 in eine 65 V Gleichspannung umgewandelt. Diese Spannung wird über die IN- und OUT Anschlüsse über Leitungen 18 (Power-Bus) zu den benachbarten Wagen 1 des Zuges 2 geführt. Das bei 13 symbolisch angedeutete gesendete Radiosignal wird in ein vom System lesbares Signal umgewandelt und über die 24 V Datenleitung ebenfalls den Wagen 1 des Zuges 2 zugeleitet.

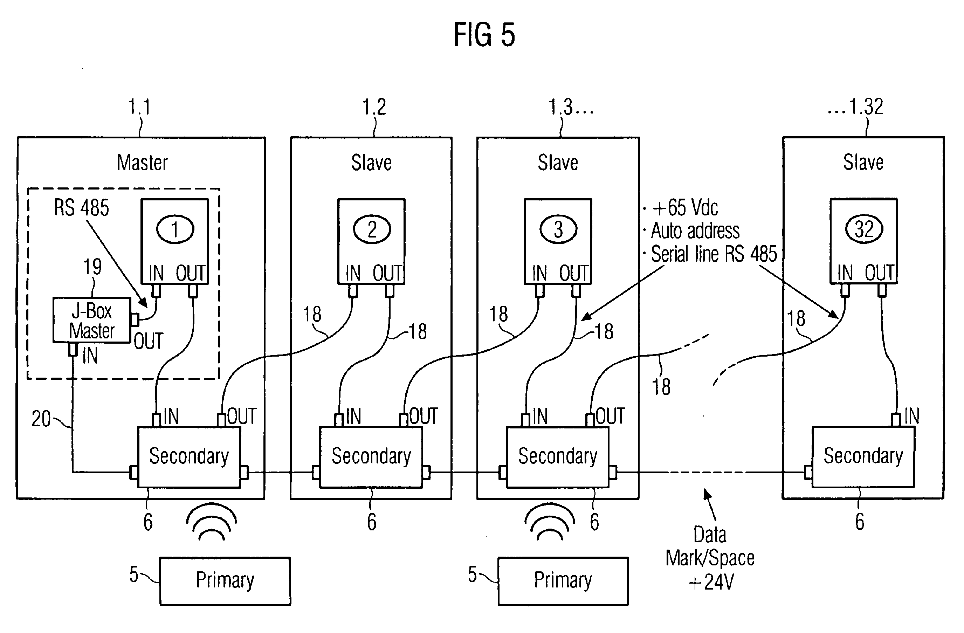

Die gesamte Systemarchitektur ist in Figur 5 dargestellt. Gezeigt sind zwei Primärteile 5, von denen Energie berührungslos auf gegenüberliegende Sekundärteile 6 einer Anzahl einen Zug 2 bildender Wagen 1.1 bis 1.32 übertragen wird. Die umgewandelte Versorgungsspannung von 65 V wird über Leitung 18 auf alle Wagen 1.1 bis 1.32 eines Zuges 2 verteilt.

Der erste Wagen 1.1 des Zuges 2 auf der linken Seite der Darstellung ist als Master ausgebildet, und über eine Junction-Box 19 über die 24 V Datenleitung (Daten-Bus) und die vorstehend beschriebene Funkverbindung mit einem übergeordneten Rechner verbunden.

Von der Junction-Box 19 ausgehend ist die Leitung 18 durch die nachfolgenden als Slave 1.2 bis 1.32 bezeichneten Wagen 1 seriell durchgeschleift (Figur 4), so dass eine Kommunikation der Junction-Box 19 mit allen Wagen 1.2 bis 1.32 eines Zuges erfolgen kann. Über die IN-OUT-Anschlüsse sind alle Wagen so miteinander verknüpft, dass eine Selbstadressierung erfolgen kann. Dies erfolgt, indem der Master 1.1 des jeweiligen Zuges 2, an den der zentrale Rechner über die Junction-Box 19 eine Adresse verteilt hat, beim Starten die Adresseninformation an den darauf folgenden Wagen 1.2 automatisch weitergibt, so dass dieser sich selbst konfiguriert. Dieser Prozess wiederholt sich über die serielle Datenleitung bis sich alle Wagen 1.x mit den entsprechenden Adressen konfiguriert haben.

Datensignale, beispielsweise zum Entladen eines Wagens 1 werden vom Primärteil 5 an das Sekundärteil 6 eines beliebigen Wagens 1.x übertragen, und in einem lesbaren Datenformat an den Master 1.1 geleitet. Von dort aus wird das Signal im RS485 Format über die Leitung 18 an denjenigen adressierten Wagen weitergeleitet, für den der Entladeauftrag bestimmt ist.

## Patentansprüche

1. Sortier- und Verteilsystem, bestehend aus zu einem Zug (2) aneinander gekoppelten, entlang von Fahrschienen verfahrbaren Wagen (1) mit jeweils mindestens einem darauf angeordneten Träger für das zu transportierende Gut und Mitteln zum Abgeben des zu transportierenden Gutes quer zur Transportrichtung der Wagen an einer vorbestimmbaren Entladestelle,
mit entlang den Fahrschienen stationär angeordneten Primärteilen (5) zur Energieversorgung der Wagen (1) des Zuges, welche Primärteile mit an den Wagen vorgesehenen in induktiver Reichweite an den Primärteilen (5) vorbei bewegbaren Sekundärteilen (6) induktiv verbindbar sind, und mit Einrichtungen (5, 6) zur drahtloser Übertragung von Steuerdaten für den Zug,
**dadurch gekennzeichnet, dass** die Primärteile (5) in Abständen zueinander entlang der Fahrschiene angeordnet sind und jeweils eine Schaltung (5.1, 10) zur Umwandlung der niederfrequenten Versorgungsspannung des jeweiligen Primärteils (5) in eine induktiv in den Sekundärteil (6) übertragene Spannung höherer Frequenz enthalten.

2. Sortier- und Verteilsystem nach Anspruch 1, **dadurch gekennzeichnet, dass** die an den Wagen (1) vorgesehenen Sekundärteile (6) mehrerer Wagen (1) über einen Power- und/oder Daten-Bus miteinander verbunden sind.

3. Sortier- und Verteilsystem nach Anspruch 1 oder 2, **dadurch gekennzeichnet, dass** der größtmögliche Abstand zwischen zwei benachbarten Primärteilen (5) geringer als die halbe Länge eines Zuges (2) ist.

4. Sortier- und Verteilsystem nach einem der Ansprüche 1 bis 3, **dadurch gekennzeichnet, dass** das Primärteil (5) sich parallel zur Fahrscheine über eine solche Länge erstreckt, dass sich stets zwei Sekundärteile (6) zumindest teilweise in induktiver Reichweite befinden.

5. Sortier- und Verteilsystem nach Anspruch 4, **dadurch gekennzeichnet, dass** der lichte Abstand zwischen den Primärteilen (5) und Sekundärteilen (6) 1 mm bis 5 mm, vorzugsweise 3 mm beträgt.

6. Sortier- und Verteilsystem nach Anspruch 1, **dadurch gekennzeichnet, dass** die drahtlose Übertragung von Steuerdaten für den Zug (2) über eine elektromagnetische Welle (13) zwischen einer am Primärteil (5) vorgesehenen Sendeantenne und einer am Sekundärteil (6) vorgesehenen Empfangsantenne erfolgt.

7. Sortier- und Verteilsystem nach einem der Ansprüche 1 bis 6, **dadurch gekennzeichnet, dass** jedes der Primärteile (5) einen Netzgleichrichter (5.1) und einen nachgeordneten Wechselrichter (10) zur Frequenztransformation umfasst, sowie mindestens einen an den Wechselrichter (10) ausgangsseitig angeschlossenen Transmitter zur Energieversorgung der Wagen (1).

8. Sortier- und Verteilsystem nach Anspruch 6, **gekennzeichnet durch** einen Wandler zur Umwandlung der zur Verfügung stehenden Steuerdaten für den Zug (2) in ein berührungslos übertragbares Signalformat.

9. Sortier- und Verteilsystem nach einem der Ansprüche 1 bis 8, **dadurch gekennzeichnet, dass** die induktiv zwischen den Primärteilen (5) und Sekundärteilen (6) übertragbare Leistung zwischen 1 und 4 kW beträgt.

10. Sortier- und Verteilsystem nach einem der Ansprüche 1 bis 9, **dadurch gekennzeichnet, dass** die Sendeantenne zur Datenübertragung zwischen dem Primärteil (5) und dem Sekundärteil (6) ein Trägersignal von 1 bis 10 MHz, vorzugsweise 5 MHz abstrahlt.

11. Sortier- und Verteilsystem nach Anspruch 10, **dadurch gekennzeichnet, dass** die Steuerdaten frequenzmoduliert auf das Trägersignal aufgeprägt werden.

12. Sortier- und Verteilsystem nach Anspruch 7, **dadurch gekennzeichnet, dass** die vom Wechselrichter (10) bereitgestellte Wechselspannung eine Frequenz von etwa 100 kHz aufweist.

13. Sortier- und Verteilsystem nach einem der Ansprüche 1 bis 12, **dadurch gekennzeichnet, dass** jedes der Sekundärteile (6) einen Transceiver und einen nachgeordneten Gleichrichter (15), sowie einen Demodulator (21) zur Umwandlung des elektromagnetisch übertragenen Steuersignals in ein vom System verarbeitetes Steuersignal, insbesondere in das ursprünglich zur Verfügung stehende Datenübertragungssignal enthält.

14. Sortier- und Verteilsystem nach einem der Ansprüche 1 bis 13, **dadurch gekennzeichnet**, das zur Regelung des zu übertragenden Energievolumens in Abhängigkeit von der aktuellen Last des Wagens (1) und/oder Zuges (2) Datenübertragungsmittel zwischen Wagen (1) oder Zug (2) und dem in induktiver Reichweite liegenden Primärteil (5) vorgesehen sind.

15. Sortier- und Verteilsystem nach einem der Ansprüche 1 bis 14, **dadurch gekennzeichnet, dass** der Netzgleichrichter (5.1) in einem außerhalb der Fahrschienen vorgesehenen und der Wechselrichter (10), der Transmitter sowie der Regler zur Regelung des zu übertragenden Energievolumens in einem innerhalb der Fahrschienen angeordneten Gehäuse (9) vorgesehen sind.

16. Verfahren zur Energie- und Datenübertragung in einem Sortier- und Verteilsystem, bestehend aus zu einem Zug (2) aneinander gekoppelten, entlang von Fahrschienen verfahrbaren Wagen (1), sowie mit entlang den Fahrschienen stationär angeordneten Primärteilen (5) zur Energieversorgung der Wagen, welche Primärteile (5) mit an den Wagen vorgesehenen Sekundärteilen (6) induktiv verbindbar sind, und mit Einrichtungen(5, 6) zur drahtlosen Übertragung von Steuerdaten für den Zug, **dadurch gekennzeichnet, dass** bei in Abständen entlang den Fahrschienen angeordneten Primärteilen (5) und in induktiver Reichweite an den Primärteilen vorbei bewegbaren Sekundärteilen (6) die niederfrequente Versorgungsspannung des jeweiligen Primärteils (5) in zunächst eine Gleichspannung und anschließend zurück in eine Wechselspannung höherer Frequenz umgewandelt wird, welche nach verlustarmer induktiver Übertragung in dem Sekundärteil (6) zu einer niedrigeren Versorgungsspannung gleichgerichtet wird.

17. Verfahren zur Energie- und Datenübertragung nach Anspruch 16, **dadurch gekennzeichnet, dass** vorzugsweise gleichzeitig mit der induktiven Übertragung die zur Verfügung stehenden Steuerdaten frequenzmoduliert auf das Trägersignal aufgeprägt, elektromagnetisch an den Wagen (1) übertragen und von dort in ein vom System verarbeitbares, insbesondere in das ursprünglich zur Verfügung stehende Datenübertragungssignal demoduliert werden.

18. Verfahren zur Energie- und Datenübertragung nach Anspruch 16 oder 17, **dadurch gekennzeichnet, dass** der Wechselrichter (10) durch eine Feedbackschleife (16) stets derart berührungslos angesteuert wird, dass die Differenz zwischen einem Sollwert der Versorgungsspannung und der sich lastabhängig einstellenden Ist-Spannung ausgeglichen wird.

## Claims

1. Sorting and distributing system, consisting of carriages (1), which are coupled to one another to form a train (2) and which can be displaced along running rails, each of them having at least one carrier arranged thereon for the goods being transported, and means to hand off the goods being transported at a predetermined unloading point transversely to the direction of transport of the carriages,
with primary parts (5), which are arranged in a stationary manner along the running rails, serving to provide power to the carriages (1), and which can be inductively connected to secondary parts (6) provided on the carriages and moveable past the primary parts (5) while in inductive range,
and with devices for wirelessly transmitting control data for the train,
**characterized in that** the primary parts (5) are spaced from each other at intervals along the running rail, and each of them includes a circuit (5.1, 10) for converting the lower frequency supply voltage of the respective primary part (5) into a higher frequency voltage which is inductively transmitted into the secondary part (6) .

2. Sorting and distributing system per claim 1, **characterized in that** the secondary parts (6) provided on the carriages (1) for several carriages (1) are connected to each other via a power and/or data bus.

3. Sorting and distributing system per claim 1 or 2, **characterized in that** the largest possible distance between two neighboring primary parts (5) is less than half the length of a train (2).

4. Sorting and distributing system per one of claims 1 to 3, **characterized in that** the primary part (5) extends parallel to the running rail for such a length that two secondary parts (6) are always at least partly in inductive range.

5. Sorting and distributing system per claim 4, **characterized in that** the open distance between the primary parts (5) and secondary parts (6) is 1 mm to 5 mm, preferably 3 mm.

6. Sorting and distributing system per claim 1, **characterized in that** the wireless transmission of control data for the train (2) occurs by an electromagnetic wave (13) between a sending antenna provided on the primary part (5) and a receiving antenna provided on the secondary part (6).

7. Sorting and distributing system per one of claims 1 to 6, **characterized in that** each of the primary parts (5) has a power mains rectifier (5.1) connected in series to an inverter (10) for the frequency transformation, and also at least one transmitter hooked up to the output of the inverter (10) for the power supply of the carriages (1).

8. Sorting and distributing system per claim 6, **characterized by** a converter to transform the available control data for the train (2) into a wirelessly transmittable signal format.

9. Sorting and distributing system per one of claims 1 to 8, **characterized in that** the power transmittable inductively between the primary parts (5) and secondary parts (6) is between 1 and 4 kW.

10. Sorting and distributing system per one of claims 1 to 9, **characterized in that** the sending antenna for the data transmission between the primary part (5) and the secondary part (6) beams out a carrier signal of 1 to 10 MHz, preferably 5 MHz.

11. Sorting and distributing system per claim 10, **characterized in that** the control data is frequency-modulated onto the carrier signal.

12. Sorting and distributing system per claim 7, **characterized in that** the alternating voltage produced by the inverter (10) has a frequency of about 100 kHz.

13. Sorting and distributing system per one of claims 1 to 12, **characterized in that** each of the secondary parts (6) contains a transceiver and a series connected rectifier (15), as well as a demodulator (21) for converting the electromagnetically transmitted control signal into a control signal which can be processed by the system, in particular into the originally existing data transmission signal.

14. Sorting and distributing system per one of claims 1 to 13, **characterized in that** data transmission means are provided between carriage (1) or train (2) and the primary part (5) lying within inductive range in order to regulate the power volume being transmitted as a function of the current load of the carriage (1) and/or train (2).

15. Sorting and distributing system per one of claims 1 to 14, **characterized in that** the mains power rectifier (5.1) is provided in a housing arranged outside of the running rails and the inverter (10), the transmitter, and the controller to regulate the power volume being transmitted are provided in a housing (9) arranged inside the running rails.

16. Method for power and data transmission in a sorting and distributing system, consisting of carriages (1), which are coupled to one another to form a train (2) and which can be displaced along running rails, and with primary parts (5) for the power supply to the carriages, which are arranged in a stationary manner along the running rails, and which can be inductively connected to secondary parts (6) provided on the carriages, and comprising devices (5, 6) for wirelessly transmitting control data for the train, **characterized in that**, for primary parts (5) arranged at intervals along the running rail and secondary parts (6) moving past the primary parts in inductive range, the lower frequency supply voltage of the respective primary part (5) is converted at first into a d.c. voltage and then back to an alternating voltage of higher frequency, which after inductive transmission with low losses is rectified to a lower power supply voltage in the secondary part (6).

17. Method for power and data transmission per claim 16, **characterized in that** preferably at the same time as the inductive transmission, the available control data are frequency-modulated onto the carrier signal, electromagnetically transmitted to the carriage (1), and demodulated there into a data transmission signal able to be processed by the system, especially into the originally existing one.

18. Method for power and data transmission per claim 16 or 17, **characterized in that** the inverter (10) is always wirelessly actuated by a feedback loop (16) so that the difference between a setpoint value of the power supply voltage and the actual voltage adjusted as a function of the load is equalized.

## Revendications

1. Système de tri et de distribution, constitué de wagonnets ou chariots (1) qui peuvent circuler le long de rails de circulation, qui sont couplés les uns aux autres en un train (2), et qui comportent chacun au moins, placé par-dessus, un support pour le produit à transporter et des moyens pour délivrer le produit à transporter transversalement à la direction de transport des chariots, au niveau d'un lieu de déchargement pouvant être prédéterminé,
le système comprenant également, agencés de manière stationnaire le long des rails de circulation, des composants primaires (5) pour l'alimentation en énergie des chariots (1) du train, ces composants primaires pouvant être couplés par voie inductive à des composants secondaires (6) prévus sur les chariots et pouvant être déplacés au-devant des composants primaires (5) à portée inductive de ceux-ci,
et comprenant également des dispositifs (5, 6) pour la transmission sans fil de données de commande pour le train,
**caractérisé en ce que** les composants primaires (5) sont disposés à distance les uns des autres le long du rail de circulation, et renferment chacun un circuit (5.1, 10) pour la conversion de la tension d'alimentation basse fréquence du composant primaire (5) respectif en une tension de fréquence plus élevée transmise par voie inductive dans le composant secondaire (6).

2. Système de tri et de distribution selon la revendication 1, **caractérisé en ce que** les composants secondaires (6) de plusieurs chariots (1), prévus sur les chariots (1), sont reliés les uns aux autres par l'intermédiaire d'un bus de puissance et/ou de données.

3. Système de tri et de distribution selon la revendication 1 ou 2, **caractérisé en ce que** la distance la plus grande possible entre deux composants primaires (5) voisins est inférieure à la moitié de la longueur d'un train (2).

4. Système de tri et de distribution selon l'une des revendications 1 à 3, **caractérisé en ce que** le composant primaire (5) s'étend parallèlement au rail de circulation, sur une longueur telle, qu'il y ait toujours deux composants secondaires (6) qui se trouvent au moins partiellement à portée inductive.

5. Système de tri et de distribution selon la revendication 4, **caractérisé en ce que** la distance d'entrefer entre les composants primaires (5) et les composants secondaires (6) est comprise entre 1 mm et 5 mm, de préférence est égale à 3 mm.

6. Système de tri et de distribution selon la revendication 1, **caractérisé en ce que** la transmission sans fil de données de commande pour le train (2) est effectuée par l'intermédiaire d'une onde électromagnétique (13) entre une antenne d'émission prévue sur le composant primaire (5) et une antenne de réception prévue sur le composant secondaire (6).

7. Système de tri et de distribution selon l'une des revendications 1 à 6, **caractérisé en ce que** chacun des composants primaires (5) comprend un redresseur (5.1) de réseau auquel succède un onduleur (10) pour la transformation de fréquence, ainsi qu'au moins un transmetteur raccordé du côté sortie à l'onduleur (10), pour l'alimentation en énergie des chariots (1).

8. Système de tri et de distribution selon la revendication 6, **caractérisé par** un convertisseur des données de commande disponibles pour le train (2) en un format de signal pouvant être transmis sans fil.

9. Système de tri et de distribution selon l'une des revendications 1 à 8, **caractérisé en ce que** la puissance pouvant être transmise par voie inductive entre les composants primaires (5) et les composants secondaires (6), est comprise entre 1 et 4 kW.

10. Système de tri et de distribution selon l'une des revendications 1 à 9, **caractérisé en ce que** l'antenne d'émission pour la transmission de données entre le composant primaire (5) et le composant secondaire (6), émet par rayonnement un signal porteur de 1 à 10 MHz, de préférence de 5 MHz.

11. Système de tri et de distribution selon la revendication 10, **caractérisé en ce que** les données de commande sont superposées au signal porteur, en étant modulées en fréquence.

12. Système de tri et de distribution selon la revendication 7, **caractérisé en ce que** la tension alternative fournie par l'onduleur (10) a une fréquence d'environ 100 kHz.

13. Système de tri et de distribution selon l'une des revendications 1 à 12, **caractérisé en ce que** chacun des composants secondaires (6) comprend un récepteur-émetteur et lui succédant, un redresseur (15) ainsi qu'un démodulateur (21) pour la conversion du signal de commande transmis par voie électromagnétique en un signal de commande traité par le système, notamment en le signal de transmission de données disponible initialement.

14. Système de tri et de distribution selon l'une des revendications 1 à 13, **caractérisé en ce que** pour la régulation du volume d'énergie à transmettre en fonction de la charge actuelle du chariot (1) et/ou du train (2), sont prévus des moyens de transmission de données entre le chariot (1) ou le train (2) et le composant primaire (5) se trouvant à portée inductive.

15. Système de tri et de distribution selon l'une des revendications 1 à 14, **caractérisé en ce que** le redresseur de réseau (5.1) est prévu dans un carter à l'extérieur des rails de circulation, et l'onduleur (10), le transmetteur ainsi que le régulateur du volume d'énergie à transmettre sont prévus dans un carter (9) agencé à l'intérieur des rails de circulation.

16. Procédé pour la transmission d'énergie et de données dans un système de tri et de distribution, constitué de chariots ou wagonnets (1) qui peuvent circuler le long de rails de circulation et sont couplés les uns aux autres en un train (2), le système comprenant également des composants primaires (5) agencés de manière stationnaire le long des rails de circulation, pour l'alimentation en énergie des chariots (1), ces composants primaires (5) pouvant être couplés par voie inductive à des composants secondaires (6) prévus sur les chariots, et comprenant également des dispositifs (5, 6) pour la transmission sans fil de données de commande pour le train, **caractérisé en ce que** pour des composants primaires (5) agencés à distance les uns des autres le long des rails de circulation, et pour des composants secondaires (6) pouvant être déplacés au-devant des composants primaires à portée inductive de ceux-ci, la tension d'alimentation basse fréquence du composant primaire (5) considéré, est tout d'abord convertie en une tension continue et ensuite à nouveau en une tension alternative de fréquence plus élevée, qui après transmission inductive à faibles pertes, est redressée dans le composant secondaire (6) en une tension d'alimentation plus basse.

17. Procédé pour la transmission d'énergie et de données selon la revendication 16, **caractérisé en ce que** de préférence simultanément avec la transmission inductive, les données de commande disponibles sont superposées au signal porteur en étant modulées en fréquence, transmises au chariot (1) par voie électromagnétique, et, à partir de là, démodulées en un signal de transmission de données pouvant être traité par le système, notamment en le signal de transmission de données disponible initialement.

18. Procédé pour la transmission d'énergie et de données selon la revendication 16 ou 17, **caractérisé en ce que** l'onduleur (10) est commandé en permanence, selon un mode sans contact, par une boucle de réaction (16), de façon telle que la différence entre une valeur de consigne de la tension d'alimentation et la tension réelle s'établissant en fonction de la charge, soit compensée.
